# EUROPEAN PATENT APPLICATION

(11) **EP 1 092 624 A2**
(43) Date of publication of application: **18.04.2001**
(21) Application number: 00122048.2
(22) Date of filing: 11.10.2000
(51) Int. Cl.: B63B 1/32, B63H 25/44, B63B 39/06

(54) **Device to control the trim and/or course of a boat**

(30) Priority: 15.10.1999 IT UD990190
(71) Applicant: LA.ME S.R.L., 20090 Opera (IT)
(72) Inventor: De Capitani, Enzo, 23852 Galbiate (LC) (IT)
(74) Representative: Petraz, Gilberto

(57) **Abstract**

Device (10) to control the trim and/or course of a boat, comprising at least a movable element (11) able to move with respect to the hull (14) of the boat so as to be selectively immersed into the water, commanded by an actuation mechanism comprising a fluid-dynamic cylinder (20) arranged with its longitudinal axis (23) substantially perpendicular to the direction of movement of said movable element (11).

## Description

### FIELD OF THE INVENTION

The invention concerns a device to control the trim and/or steer of a boat, comprising a substantially rectangular plate arranged in the aft zone of the boat and able to be selectively immersed into the water. A command mechanism actuated by a fluid-dynamic piston is able to command the plate to be lowered and raised with respect to the hull of the boat.

### BACKGROUND OF THE INVENTION

The state of the art includes a device to control the trim of a boat by means of a plate arranged substantially horizontally in the aft zone, or slightly inclined to follow the profile thereof, wherein a pair of oil-dynamic cylinders are associated with the plate to command the vertical movement thereof.

In this device the oil-dynamic cylinders are arranged above the plate, with their axes vertical, that is, parallel to the direction of movement of the plate.

This means that the conventional device is rather cumbersome and heavy. It also has the disadvantage that it requires a sophisticated control device to simultaneously command both the actuation cylinders.

The present Applicant has devised, designed and perfected the device to control the trim and/or steer of a boat according to the invention to overcome these shortcomings.

### SUMMARY OF THE INVENTION

The device to control the trim and/or steer of a boat according to the invention is set forth and characterized in the main claim, while the dependent claims describe other innovative features of the invention.

One purpose of the invention is to achieve a device to control the trim and/or steer of a boat which is simple, reliable and easy to install.

In accordance with this purpose, the device according to the invention comprises at least a movable element able to move with respect to the hull of the boat so as to be selectively immersed into the water. The element is commanded by an actuation mechanism which in turn comprises a fluid-dynamic cylinder arranged with its longitudinal axis substantially perpendicular to the direction of movement of the movable element.

According to another characteristic of the invention, the movable element is guided by vertical guide means which allow it to slide in a substantially vertical direction, the fluid-dynamic cylinder is arranged with its longitudinal axis substantially horizontal and the movable element is connected to the piston of the cylinder by means of at least a pin-eyelet coupling.

According to another characteristic of the invention, the movable element comprises a plate on which two eyelets are made, inclined with respect to the longitudinal axis of the cylinder and coupled with corresponding transverse pins associated with the outer ends of the piston.

According to another characteristic of the invention, the movable plate is substantially rectangular and the actuation cylinder is arranged in a compartment made in a substantially median zone of the plate, so that it remains within the space occupied by the latter.

### BRIEF DESCRIPTION OF THE DRAWINGS

These and other characteristics of the invention will become clear from the following description of a preferred form of embodiment, given as a non-restrictive example with reference to the attached Figures wherein:
Fig. 1 is a front view of a device to control the trim and/or steer of a boat according to the invention, in its inactive position;
Fig. 2 is a front view of the device in Fig. 1 in a first working position;
Fig. 3 is a front view of the device in Fig. 1 in a second working position;
Fig. 4 is a large scale section along a line from A to A in Fig. 1;
Fig. 5 is a large scale section along a line from B to B in Fig. 1;
Fig. 6 is a large scale section along a line from C to C in Fig. 1;
Fig. 7 is a large scale section along a line from D to D in Fig. 1.

### DETAILED DESCRIPTION OF PREFERRED EMBODIMENT

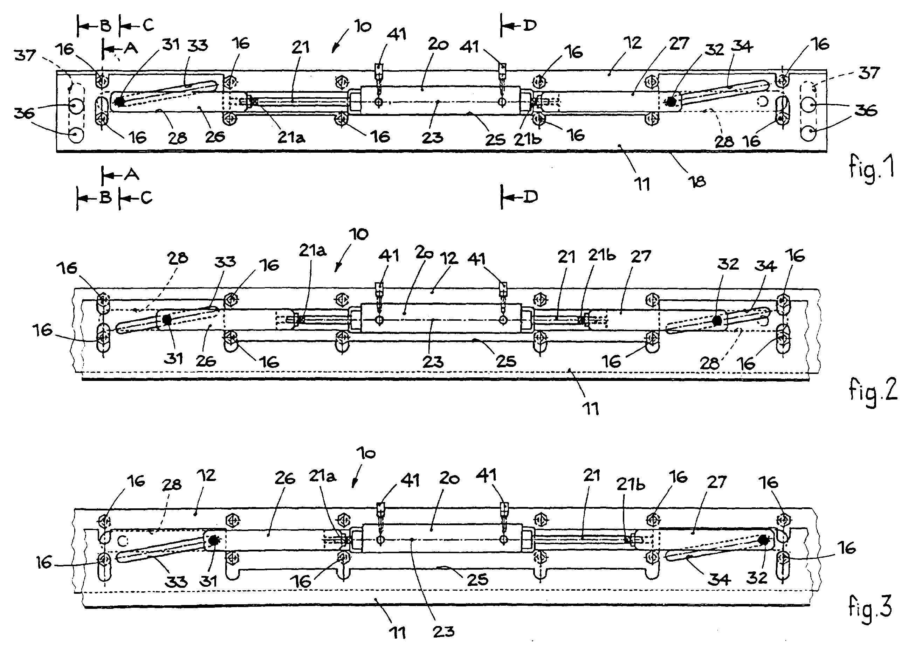

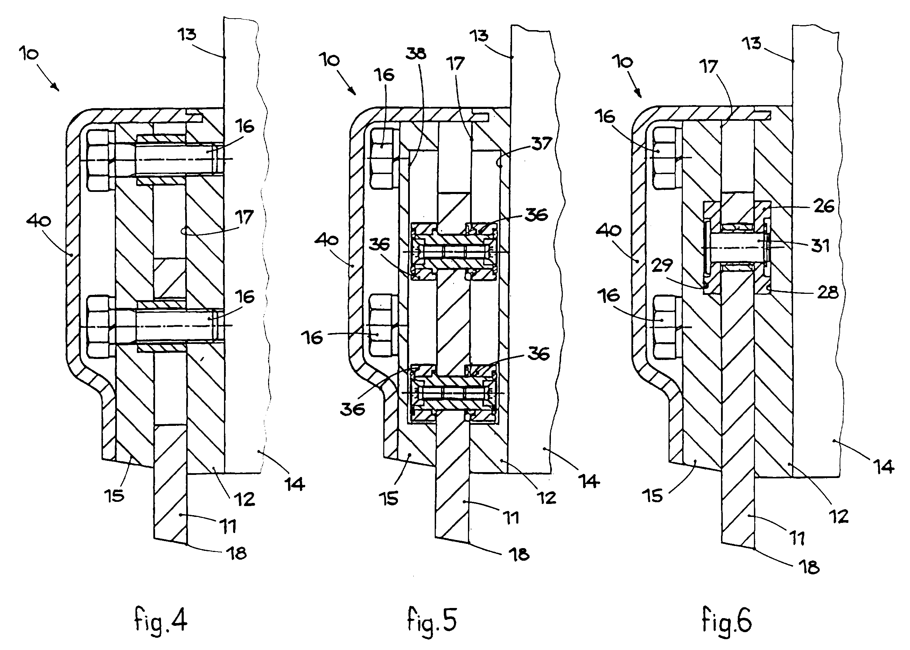

With reference to the attached Figures, a device 10 to control the trim and/or steer of a boat according to the invention comprises a metal plate 11, substantially rectangular in shape and about 12 mm thick, which is mounted sandwich-wise between a metal support 12, attached to the aft wall 13 (Figs. 4-7) of the hull 14 of the boat, and an outer element 15, so as to be able to slide vertically with respect thereto.

The outer element 15 consists of a metal plate and is attached to the support 12 by means of a plurality of screws 16, so as to define a vertical interspace 17 inside which the metal plate 11 is housed.

The lower part of the plate 11 has a pointed edge 18, facing towards the hull 14.

The device 10 can be advantageously mounted on the transom of the boat, as shown in the drawings, to control the trim thereof, but also on the sides to control the steer.

According to the size of the boat, the plate 11 may be several metres long.

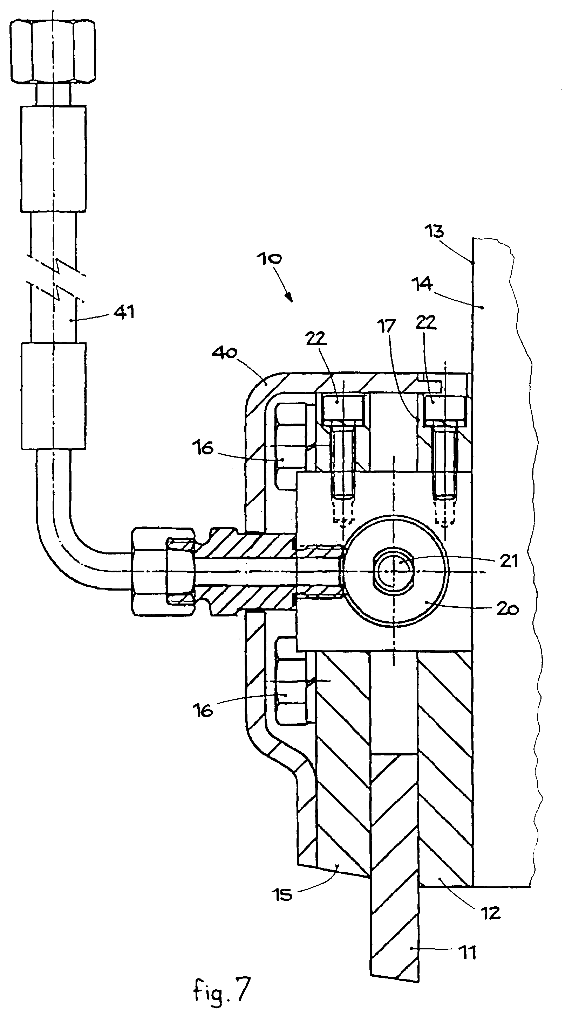

According to one characteristic of the invention, a command cylinder 20, of a conventional, oil-dynamic type, provided with a corresponding piston 21, is attached to the support 12, for example by means of clamping screws 22 (Fig. 7), so as to be arranged with its longitudinal axis 23 (Figs. 1-3) substantially horizontal, that is, perpendicular to the movement which the plate 11 is able to make.

The cylinder 20 is housed in a compartment 25, substantially parallelepiped in shape, made between the support 12 and the outer element 15, in the median zone of the plate 11, so that the cylinder 20 is substantially included in the space occupied by the plate 11, both in the inactive and in the working positions.

The piston 21 is provided with two ends 21a and 21b which protrude from opposite sides of the cylinder 20 arranged in the center; they are connected to two corresponding forks 26 and 27 guided in horizontal slits 28 and 29 (Fig. 6) which are made opposite each other, one on the support 12 and the other on the outer element 15.

Each fork 26 and 27 has a transverse pin 31, respectively 32, at the end of its arms, which is coupled with a corresponding eyelet 33, respectively 34, of the plate 11.

The eyelets 33 and 34, in the form of embodiment shown here purely as an example, are inclined by about 11° with respect to the horizontal plane, although this inclination can vary, in order to vary the distribution of the components of force applied by the piston 21 to the plate 11.

The plate 11 is also provided with four pairs of wheels 36 (Figs. 1 and 5) housed in pairs in vertical grooves 37 and 38 made in the support 12 and, respectively, in the element 15.

A water-tight covering element 40 is associated with the support 12 and the outer element 15, to protect the cylinder 20, the piston 21 and the other members of the device 10 from contact with the water.

The cylinder 20 is connected to an oil-dynamic system, of a conventional type and not shown in the drawings, by means of conduits 41.

The device 10 as described heretofore functions as follows:

In the inactive condition (Fig. 1) the cylinder 20 has the piston 21 completely displaced to the left, so that the pins 31 and 32 are arranged in the lower part of the inclined eyelets 33 and 34. In this position the plate 11 is completely raised and its lower edge is substantially aligned with the bottom of the hull 14.

By actuating the cylinder 20, by means of the conduits 41, the piston 21 is displaced towards the right (Fig. 2). Because of the coupling between the transverse pins 31 and 32 with the corresponding eyelets 33 and 34, and because of the constraint represented by the vertical grooves 37 and 38, the plate 11 is consequently displaced downwards, immersing itself in the water below.

The travel of the plate 11 with respect to the support 12, and therefore with respect to the hull 14 of the boat, is a linear function of the travel of the piston 21 with respect to the cylinder 20.

At end-of-travel, when the piston 21 is completely displaced to the right (Fig. 3), the transverse pins 31 and 32 are in the upper part of the eyelets 33 and 34 and the plate 11 is at the end of its immersion in the water.

In this way, with the inclination as described above of the eyelets 33 and 34, and a horizontal travel of the piston 21 for example of about 142 mm, we obtain a vertical travel of the plate 11 of about 25 mm, that is, sufficient to create a trim and/or steer effect, braking the fluid threads which adhere to the hull 14 and thus transforming the kinetic energy into pressure energy which raises the boat, and/or thrusts it laterally, when it is moving, allowing to control the trim and/or steer, according to where the device is mounted, as previously explained.

A control unit, to control the actuation of the cylinder 20 and the travel of the piston 21, of a conventional type and not shown in the drawings, can be associated with the device 10 to determine the optimum value of the travel of the plate 11, according to the type of boat and the shape of the hull 14.

A potentiometer can be inserted, for example, into the interspace 17 to monitor the vertical movements of the plate 11 and transmit a corresponding electric signal to said control unit.

It is obvious that modifications and additions can be made to the device 10 as described heretofore, but these shall remain within the field and scope of this invention.

It is also obvious that, although the description refers to a specific example, a person of skill shall certainly be able to achieve many equivalent forms of the device to control the trim and/or steer of a boat, all of which shall come within the field and scope of the invention.

## Claims

1. Device to control the trim and/or steer of a boat, comprising at least a movable element (11) able to move with respect to the hull (14) of the boat so as to be selectively immersed into the water, commanded by an actuation mechanism, the device being characterized in that said actuation mechanism comprises a fluid-dynamic cylinder (20) arranged with its longitudinal axis (23) substantially perpendicular to the direction of movement of said movable element (11).

2. Device as in Claim 1, characterized in that said movable element (11) is guided by vertical guide means (37, 38) to slide along a substantially vertical axis and in that said fluid-dynamic cylinder (20) is arranged with its longitudinal axis (23) substantially horizontal.

3. Device as in Claim 1 or 2, characterized in that said movable element (11) is connected to the movable piston (21) of said cylinder (20) by means of at least a pin (31)-eyelet (33) coupling.

4. Device as in Claim 3, characterized in that said movable element comprises a plate (11) on which at least an eyelet (33, 34) is made, inclined with respect to said longitudinal axis (23) of said cylinder (20) and coupled with a corresponding transverse pin (31, 32) associated with an outer end (21a, 21b) of said piston (21).

5. Device as in Claim 4, characterized in that said plate (11) is substantially rectangular in shape and in that said cylinder (20) is arranged in a compartment (25) made in a substantially median zone of said plate (11).

6. Device as in Claim 5, characterized in that a pair of eyelets (33, 34) is made on said plate (11) on opposite sides with respect to said cylinder (20), said pair of eyelets (33, 34) having the same inclination with respect to said longitudinal axis (23) of said cylinder (20).

7. Device as in Claim 6, characterized in that said inclination is about 11°.

8. Device as in Claim 4, characterized in that said plate (11) is mounted sliding in an interspace (17) made between a support element (12) attached to said hull (14) and an outer element (15) attached to said support (12).

9. Device as in Claim 5, characterized in that said piston (21) comprises two ends (21a, 21b) arranged on opposite sides with respect to said cylinder (20), each of which is associated with a corresponding fork (26, 27) able to support one of said transverse pins (31, 32).

10. Device as in Claim 8, characterized in that a water-tight covering element (40) is associated with said support (12) and with said outer element (15) to protect at least said cylinder (20) and said piston (21) from contact with the water.
